# EUROPÄISCHE PATENTSCHRIFT

(11) **EP 0 896 770 B1**
(45) Veröffentlichungstag und Bekanntmachung des Hinweises auf die Patenterteilung: **22.10.2003**
(21) Anmeldenummer: 97923773.2
(22) Anmeldetag: 30.04.1997
(51) Int. Cl.: H04M 3/20, H04Q 3/00

(54) **VERFAHREN ZUM ABHÖREN EINER KOMMUNIKATIONSVERBINDUNG**
PROCESS FOR MONITORING A COMMUNICATION LINE
PROCEDE D'ECOUTE D'UNE LIGNE DE TELECOMMUNICATIONS

(30) Priorität: 30.04.1996 DE 19617353
(43) Veröffentlichungstag der Anmeldung: 17.02.1999
(73) Patentinhaber: SIEMENS AKTIENGESELLSCHAFT, 80333 München (DE)
(72) Erfinder: GUNDLACH, Michael, D-81739 München (DE)
(86) Internationale Anmeldenummer: DE9700888
(87) Internationale Veröffentlichungsnummer: WO97041678

(56) Entgegenhaltungen:
- CH-A- 681 409
- US-A- 4 712 230
- US-A- 5 590 171
- TSCHIRGI J E ET AL: "SPEECH TECHNOLOGY AND APPLICATIONS IN THE INTELLIGENT NETWORK" SUPERCOMM / ICC '92 (INTERNATIONAL CONFERENCE ON COMMUNICATIONS), 14. - 18.Juni 1992, CHICAGO (US), Seiten 71-75, XP000326852

## Beschreibung

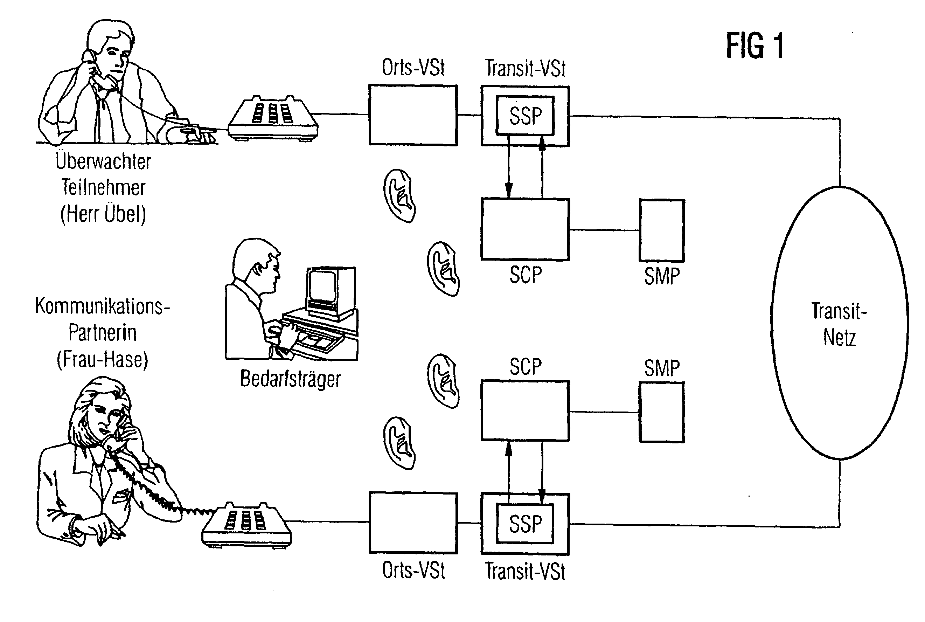

Nationale und internationale Gesetze verlangen von Betreibern eines öffentlichen und in Zukunft voraussichtlich auch eines privaten Netzes, den sogenannten Bedarfsträgern (Kriminalpolizei, Geheimdienst, etc.), unter Beachtung gewisser gesetzlicher Vorschriften zum Schutz der Kommunikationsteilnehmer (z. B. richterliche Genehmigung), den Fernmeldeverkehr verdächtiger Personen zu überwachen. Während dies bei klassischen Telefondiensten im Festnetz in der lokalen Vermittlungsstelle des zu überwachenden Teilnehmers durch Kennzeichnung des entsprechenden Teilnehmerdatensatzes und Einrichtung einer Art Konferenzschaltung zum Bedarfsträger relativ einfach möglich ist, besteht bei Intelligenten Netzen (IN) eine prinzipielle Schwierigkeit. Diese ergibt sich aus der Funktionsaufteilung von Signalisierung und Sprechverkehr auf verschiedene Netzkomponenten. Bei IN-Calls ist im allgemeinen vorab nicht festgelegt, über welche Vermittlungsstellen (VSt) Gespräche eines zu überwachenden Teilnehmers laufen. Ferner stehen nicht alle zur Überwachung erforderlichen Daten (u.a. IN-Nummern und Festnetz-Rufnummern der Kommunikationspartner) am selben Ort zur Verfügung. Die prinzipielle Konfiguration ist in Figur 1 dargestellt.

Für Festnetze ohne IN-Funktionalität sind die gesetzlichen Anforderungen, wie z. B. in der CH-A-681 409 beschrieben, i.w. erfüllt bzw. sollen in die nächsten Versionen eingebracht werden. Für IN gibt es bisher keine Lösungen. Die vergleichbare Problematik im Mobilfunk wurde mit anderen als den vorgeschlagenen Mitteln gelöst. Diese Lösung ist jedoch nur bedingt auf IN zu übertragen und hat außerdem den Nachteil, daß die Kommunikation über eine Schleife über eine spezielle Vermittlungsstelle geführt werden muß, was erstens in unnötigem Umfang Netz-Ressourcen verbraucht und zweitens unter Umständen von den abgehörten Teilnehmern bemerkt werden kann.

Der Erfindung liegt daher die Aufgabe zugrunde, ein Verfahren zum Abhören einer Kommunikationsverbindung anzugeben, welches für Kommunikationsdienste mit IN-Diensten geeignet ist. Diese Aufgabe wird durch ein Verfahren nach Anspruch 1 gelöst.

Die Erfindung ermöglicht es einerseits, IN-Teilnehmer zu überwachen, insbesondere auch, wenn diese mobil sind (z.B. bei den IN-Diensten Universal Personal Telecommunication / UPT, Cordless Terminal Mobility / CTM, Virtual Card Calling / VCC). Andererseits wird es auch ermöglicht, einem Bedarfsträger alle von ihm geforderten Daten, wie z.B. Festnetz-Rufnummern und IN-Nummern der beteiligten Kommunikationspartner, zu übermitteln.

Im folgenden wird die Erfindung mit Hilfe der Figuren und anhand bevorzugter Ausführungsbeispiele näher beschrieben.

Dabei wird zur übersichtlichen Darstellung der Erfindung zwischen zwei Fällen unterschieden:
Fall 1: Der zu überwachende Teilnehmer, in den Beispielen Herr Übel genannt, ist IN-Teilnehmer.
   (a) Die IN-Nummer des zu überwachende Teilnehmers wird im Service Control Point (SCP) gekennzeichnet. Diese Kennzeichnung enthält eine Angabe darüber, welcher Bedarfsträger eine Abhörmöglichkeit erhält. Die Kennzeichnung kann über den Service Management Point (SMP) erfolgen.
   (b) In einer Erweiterung des IN-spezifischen Protokolls zwischen dem SCP und dem Service Switching Point (SSP) (in der Regel in der Transit-Vermittlungsstelle (VSt) des anrufenden Teilnehmers) wird der SSP informiert, daß und von wem das entsprechende Telefonat zu überwachen ist.
   (c) Von der VSt, in der der SSP liegt, wird eine Dreierkonferenz zum Bedarfsträger aufgebaut. Diesem werden die Verbindungsdaten (Festnetz-Rufnummern, IN-Nummern, Zeit, Dauer des Gesprächs) und der Inhalt des Gesprächs bzw. der Datenverbindung online übermittelt.
Fall 2: Der Kommunikationspartner des zu überwachende Teilnehmers, in den Beispielen Frau Hase genannt, ist IN-Teilnehmer.
   (a) Die Rufnummer des zu überwachenden Teilnehmers wird in der Vermittlungsstelle dieses Teilnehmers gekennzeichnet. Diese Kennzeichnung enthält eine Angabe darüber, welcher Bedarfsträger eine Abhörmöglichkeit erhält. Ist der zu überwachende Teilnehmer ein Teilnehmer im klassischen Sinn, d.h. kein IN-Teilnehmer, so erfolgt diese Kennzeichnung einmalig in der Orts-VSt dieses Teilnehmers. Ist der zu überwachende Teilnehmer ein IN-Teilnehmer, so erfolgt die Kennzeichnung gemäß Fall 1.
   (b) Die in (a) genannte VSt fordert vom SSP des Kommunikationspartners die in der VSt nicht vorliegenden Daten an (z.B. die IN-Nummer oder die Festnetz-Rufnummer des Kommunikationspartners).
   (c) Die VSt baut eine Dreierkonferenz zum Bedarfsträger auf. Diesem werden die Verbindungsdaten (Festnetz-Rufnummern, IN-Nummern, Zeit, Dauer des Gesprächs) und der Inhalt des Gesprächs bzw. der Datenverbindung online übermittelt.

Im folgenden werden fünf Beispiele erläutert. Weitere Beispiele, insbesondere Kombinationen der erläuterten Beispiele (beide Teilnehmer sind IN-Teilnehmer), sind möglich und können entsprechend der Beschreibung in Kapitel 3 behandelt werden.
Beispiel 1. Der zu überwachende Teilnehmer ist IN-Teilnehmer und wird angerufen.
Beispiel 2. Der zu überwachende Teilnehmer ist IN-Teilnehmer und ruft an.
Beispiel 3. Der zu überwachende Teilnehmer wird von einem IN-Teilnehmer angerufen.
Beispiel 4. Der zu überwachende Teilnehmer ruft einen IN-Teilnehmer an.
Beispiel 5. Der zu überwachende Teilnehmer ist IN-Teilnehmer greift auf den SCP zu (z.B. Service Profile Modification oder Registration for UPT Incoming Calls).

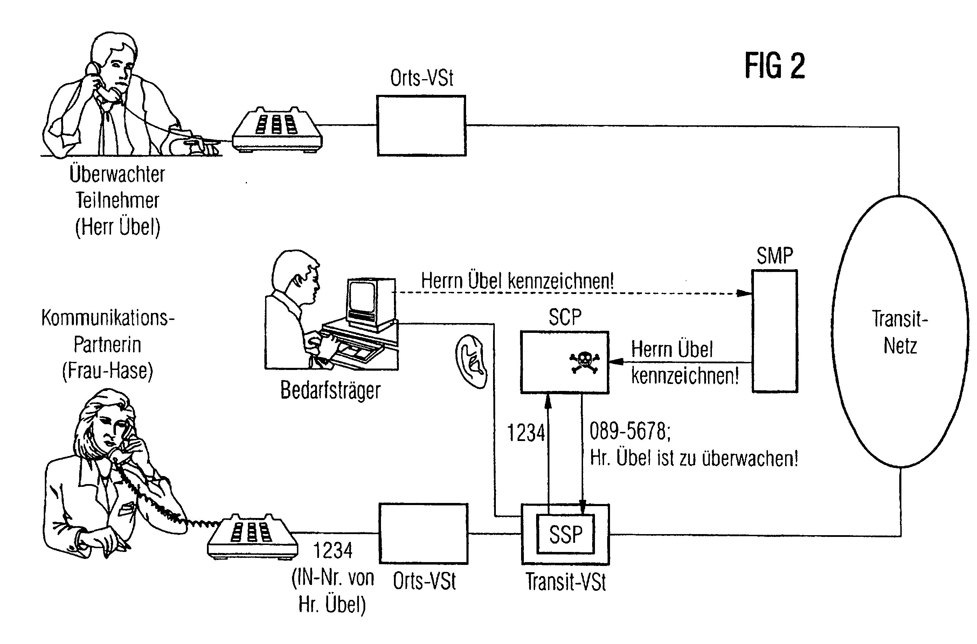

Im folgenden wird das Ablaufprotokoll für das Beispiel 1 beschrieben.
Der zu überwachende Teilnehmer, Herr Übel, ist IN-Teilnehmer und wird von Frau Hase angerufen.Der Datenfluß des folgenden Ablaufprotokolls ist in Figur 2 dargestellt.
1. Auf Anordnung des Bedarfsträgers wird im SCP die IN-Nummer von Herrn Übel als zu überwachen gekennzeichnet (einmaliger Vorgang).
2. Frau Hase wählt die IN-Nummer von Herrn Übel.
3. Der Service Switching Point (SSP) übermittelt die IN-Nummer an den zuständigen Service Control Point (SCP).
4. Die Service Data Function (SDF) im SCP überprüft die zur übermittelten IN-Nummer gehörenden Daten, unter anderem:
   - Festnetz-Rufnummer;
   - Kennzeichnung, daß der Teilnehmer zu überwachen ist;
   - Identität des überwachenden Bedarfsträgers.
5. Der SCP sendet diese Daten an den SSP in der VSt.
6. Die VSt stellt aufgrund dieser Daten eine Verbindung sowohl zu Herrn Übel als auch zum Bedarfsträger her.
7. Die geforderten Daten (z.B. Festnetz-Rufnummern, Zeit und Dauer der Verbindung) und das laufende Telefongespräch (bzw. die Datenübertragung) werden von der VSt an den Bedarfsträger übertragen, unmerkbar für Herrn Übel und Frau Hase.

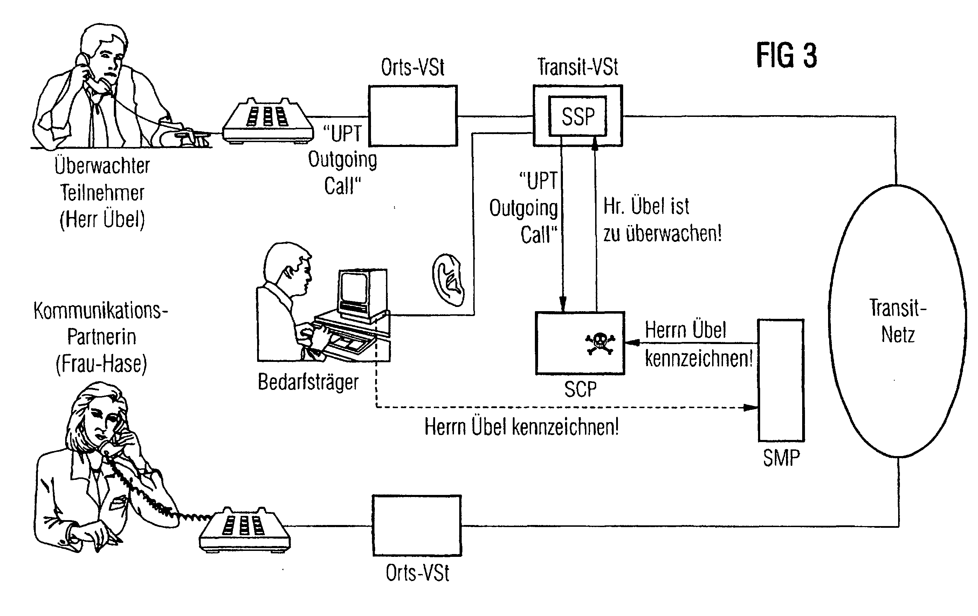

Im folgenden wir das Ablaufprotokoll für das Beispiel 2 beschrieben.
Der zu überwachende Teilnehmer, Herr Übel, ist IN-Teilnehmer und ruft Frau Hase an, z.B. als Outgoing UPT Call. Der Datenfluß des folgenden Ablaufprotokolls ist in Figur 3 dargestellt.
1. Auf Anordnung des Bedarfsträgers wird im SCP die IN-Nummer von Herrn Übel als zu überwachen gekennzeichnet (einmaliger Vorgang).
2. Herr Übel macht einen Outgoing UPT Call und wählt die Rufnummer von Frau Hase.
3. Der Service Switching Point (SSP) übermittelt die IN-Nummer von Herrn Übel an den zuständigen Service Control Point (SCP).
4. Die Service Data Function (SDF) im SCP überprüft die zur übermittelten IN-Nummer gehörenden Daten, unter anderem:
   - Vergebührungsinformation;
   - Kennzeichnung, daß der Teilnehmer zu überwachen ist;
   - Identität des überwachenden Bedarfsträgers.
5. Der SCP sendet diese Daten an den SSP in der VSt.
6. Die VSt stellt aufgrund dieser Daten eine Verbindung sowohl zu Frau Hase als auch zum Bedarfsträger her.
7. Die geforderten Daten (z.B. Festnetz-Rufnummern und IN-Nummer, Zeit und Dauer der Verbindung) und das laufende Telefongespräch (bzw. die Datenübertragung) werden an den Bedarfsträger übertragen, unmerkbar für Herrn Übel und Frau Hase.

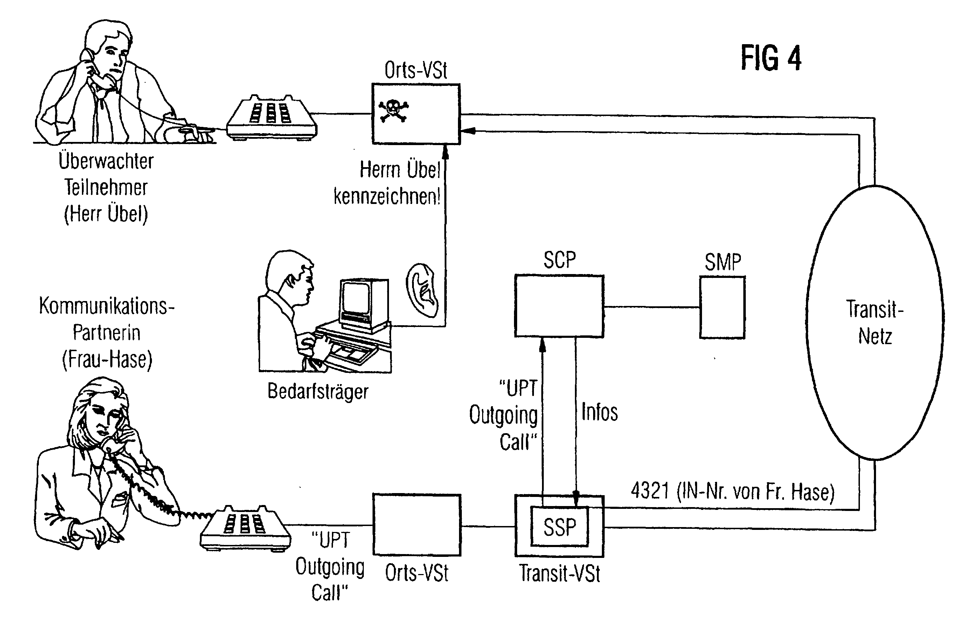

Im folgenden wird das Ablaufprotokoll für das Beispiel 3 beschrieben.
Der zu überwachende Teilnehmer, Herr Übel, ist kein IN-Teilnehmer und wird von einem IN-Teilnehmer, Frau Hase, angerufen. Der Datenfluß des folgenden Ablaufprotokolls ist in Figur 4 dargestellt.
1. Auf Anordnung des Bedarfsträgers wird in der Orts-VSt von Herrn Übel dieser als zu überwachen gekennzeichnet (einmaliger Vorgang).
2. Frau Hase macht z.B. einen Outgoing UPT Call und wählt die Rufnummer von Herrn Übel.
3. Der Service Switching Point (SSP) der VSt übermittelt die IN-Nummer von Frau Hase an den zuständigen Service Control Point (SCP).
4. Die Service Data Function (SDF) im SCP überprüft die zur übermittelten IN-Nummer gehörenden Daten, z.B. Vergebührungsinformation.
5. Der SCP sendet diese Daten an den SSP in der VSt.
6. Die VSt stellt eine Verbindung zu Herrn Übel her.
7. In seiner Orts-VSt ist Herr Übel als zu überwachen gekennzeichnet. Entsprechend wird eine Verbindung von dort zum Bedarfsträger hergestellt.
8. Da die Orts-VSt normalerweise nur die Festnetz-Rufnummer von Frau Hase, nicht jedoch deren IN-Nummer erhält, fordert die Orts-VSt beim SSP die IN-Nummer des Anrufenden an.
9. Die geforderten Daten (z.B. Festnetz-Rufnummern und IN-Nummer, Zeit und Dauer der Verbindung) und das laufende Telefongespräch (bzw. die Datenübertragung) werden an den Bedarfsträger übertragen, unmerkbar für Herrn Übel und Frau Hase.

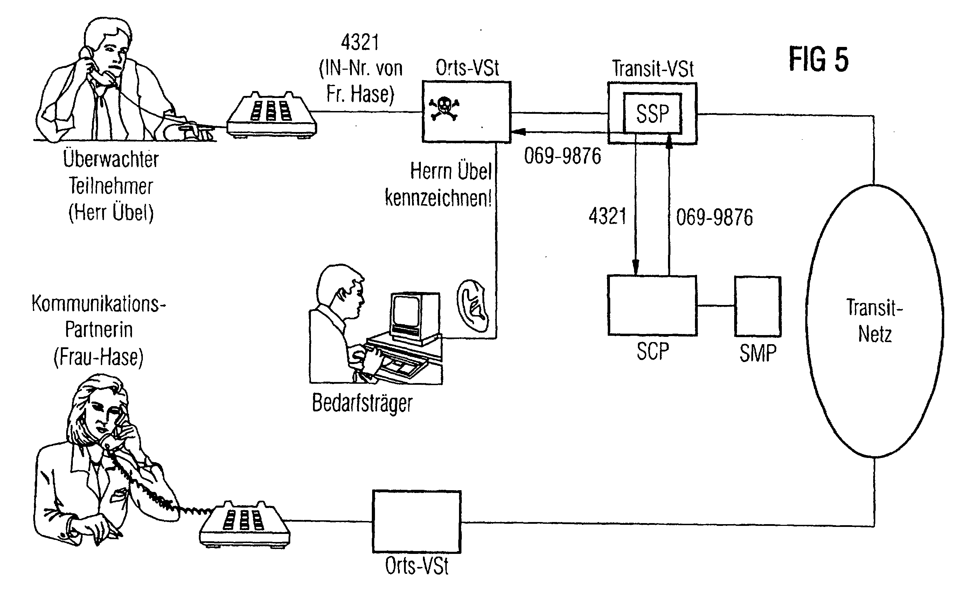

Im folgenden wird das Ablaufprotokoll für das Beispiel 4 beschrieben.
Der zu überwachende Teilnehmer, Herr Übel, ruft einen IN-Teilnehmer, Frau Hase, an. Der Datenfluß des folgenden Ablaufprotokolls ist in Figur 5 dargestellt.
1. Auf Anordnung des Bedarfsträgers wird in der Orts-VSt von Herrn Übel dieser als zu überwachen gekennzeichnet (einmaliger Vorgang).
2. Herrn Übel wählt die IN-Nummer von Frau Hase.
3. Der Service Switching Point (SSP) der VSt übermittelt die IN-Nummer von Frau Hase an den zuständigen Service Control Point (SCP).
4. Die Service Data Function (SDF) im SCP überprüft die zur übermittelten IN-Nummer gehörenden Daten, z.B. die aktuelle Festnetz-Rufnummer von Frau Hase.
5. Der SCP sendet diese Daten an den SSP in der VSt.
6. Die VSt stellt eine Verbindung zu Frau Hase her.
7. In seiner Orts-VSt ist Herr Übel als zu überwachen gekennzeichnet. Entsprechend wird eine Verbindung von dort zum Bedarfsträger hergestellt.
8. Falls (je nach IN-Dienst unterschiedlich realisiert) die Orts-VSt nur die (gewählte) IN-Nummer von Frau Hase, nicht jedoch deren aktuelle Festnetz-Rufnummer kennt, fragt die Orts-VSt beim SSP nach, welche Festnetz-Rufnummer benutzt wurde.
9. Die geforderten Daten (z.B. Festnetz-Rufnummern und IN-Nummer, Zeit und Dauer der Verbindung) und das laufende Telefongespräch (bzw. die Datenübertragung) werden an den Bedarfsträger übertragen, unmerkbar für Herrn Übel und Frau Hase.

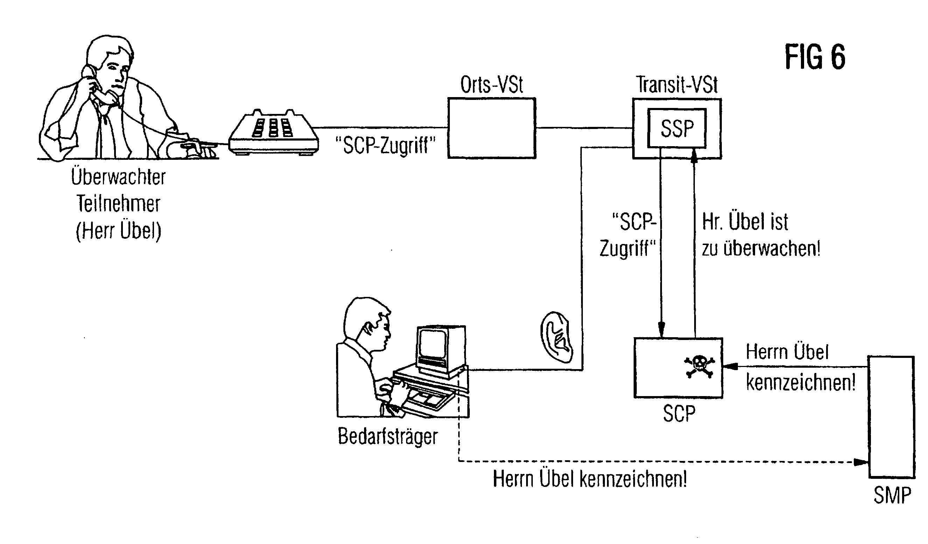

Im folgenden wird das Ablaufprotokoll für das Beispiel 5 beschrieben.
Der zu überwachende Teilnehmer, Herr Übel, ist IN-Teilnehmer und greift auf den SCP zu (z.B. Service Profile Modification oder Registration for UPT Incoming Calls). Der Datenfluß des folgenden Ablaufprotokolls ist in Figur 6 dargestellt.
1. Auf Anordnung des Bedarfsträgers wird im SCP die IN-Nummer von Herrn Übel als zu überwachen gekennzeichnet (einmaliger Vorgang).
2. Herr Übel startet einen SCP-Zugriff.
3. Der Service Switching Point (SSP) übermittelt die IN-Nummer von Herrn Übel an den zuständigen Service Control Point (SCP).
4. Die Service Data Function (SDF) im SCP überprüft die zur übermittelten IN-Nummer gehörenden Daten, unter anderem:
   - Kennzeichnung, daß der Teilnehmer zu überwachen ist;
   - Identität des überwachenden Bedarfsträgers.
5. Der SCP sendet diese Daten an den SSP in der VSt.
6. Die VSt stellt aufgrund dieser Daten eine Verbindung zum Bedarfsträger her.
7. Der Dialog zwischen Herrn Übel und dem SCP, inclusive Zeit und Dauer des SCP-Zugriffs wird an den Bedarfsträger übertragen, unmerkbar für Herrn Übel.

Im folgenden werden die Funktionen der Komponenten beschrieben.
Die Netzkomponenten Orts-VSt, Transit-VSt mit SSP und SCP sind um die in den Ablaufprotokollen beschriebenen Funktionalitäten zu erweitern. Dies bedeutet im einzelnen:
Im folgenden werden die Funktionen des Service-Kontroll-Punktes (Service Control Point, SCP) beschrieben.
Der SCP, Realisierung der IN-Funktionalitäten Service Control Function (SCF) und Service Data Function (SDF), wird um folgende Funktionen erweitert:
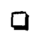 Speicherung und Behandlung eines Kennzeichens, ob ein Teilnehmer zu überwachen ist
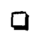 Speicherung und Behandlung der Identität(en) eines oder mehrere Bedarfsträger, die eine Überwachungsmaßnahme durchführen
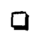 Übertragung dieser Daten an den SSP

Im folgenden werden die Funktionen der Transit-Vermittlungsstelle beschrieben:
Die Transit-VSt und der dort implementierte SSP werden um folgende Funktionen erweitert:
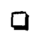 Temporäre Speicherung eines Kennzeichens, daß ein Teilnehmer zu überwachen ist
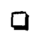 Temporäre Speicherung der Identität(en) eines oder mehrere Bedarfsträger, die eine Überwachungsmaßnahme durchführen
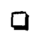 Schaltung ("Stich") zum Bedarfsträger
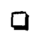 Übertragung der Verbindungsdaten an den Bedarfsträger
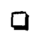 Senden von Verbindungsdaten (insbesondere Festnetz-Rufnummer) zu einer fernen VSt

Im folgeden werden die Funktionen der Orts-Vermittlungsstelle beschrieben.
Die Orts-VSt enthält bereits die Möglichkeit, einen Teilnehmer für eine Überwachung zu kennzeichnen und Kommunikationsund Verbindungsdaten an einen oder mehrere Bedarfsträger zu übermitteln. Zusätzlich erforderlich ist folgende Funktion:
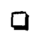 Anforderung von Verbindungsdaten (insbesondere Pestnetz-Rufnummer) von einem fernen SSP

In dieser Patentanmeldung wurden die folgenden Abkürzungen verwendet:

| | | | |
|---|---|---|---|
| CTM | Cordless Terminal Mobility | DTAG | Deutsche Telekom AG |
| IN | Intelligent Network | SCF | Service Control Function |
| SCP | Service Control Point | SSF | Service Switching Function |
| SSP | Service Switching Point | UPT | Universal Personal Telecommunication |
| VCC | Virtual Card Calling | VSt | Vermittlungsstelle |

## Patentansprüche

1. Verfahren zum Abhören einer Kommunikationsverbindung, insbesondere eines Telefongesprächs, zwischen zwei Kommunikationsteilnehmern, von denen mindestens einer ein zu überwachender Teilnehmer ist, wobei der zumindest eine zu überwachende Teilnehmer ein Teilnehmer eines intelligenten Netzes ist, **gekennzeichnet durch** folgende Merkmale:
a) die Rufnummer des zu überwachenden Teilnehmers oder der zu überwachenden Teilnehmer wird **durch** einen entsprechenden Eintrag in einem Speichermittel eines Dienstkontrollpunktes (Service Control Point, SCP) eines Kommunikationsnetzes **gekennzeichnet**, wobei diese Kennzeichnung eine Angabe darüber enthält, welcher dritte bzw. welche dritten Kommunikationsteilnehmer zum Abhören einer Kommunikationsverbindung mit diesem zu überwachenden Teilnehmer berechtigt sein soll bzw. sollen;
b) eine Vermittlungsstelle (Service Switching Point) wird **durch** den Dienstkontrollpunkt informiert, dass und welcher Teilnehmer zu überwachen ist;
c) wird ein zu überwachender Teilnehmer angerufen oder ruft er einen zweiten Kommunikationsteilnehmer an, wird eine Dreierkonferenz des zu überwachenden Teilnehmers und des anrufenden bzw. angerufenen zweiten Kommunikationsteilnehmers mit einem zum Abhören berechtigten dritten Kommunikationsteilnehmer aufgebaut;
d) es werden für Teilnehmer eines intelligenten Netzes charakteristische Teilnehmerdaten, wie beispielsweise die IN-Nummer oder die Dauer eines SCP-Zugriffs, an einen berechtigten dritten Kommunikationsteilnehmer übermittelt.

## Claims

1. Method for monitoring a communication link, particularly a telephone call, between two communicating subscribers, at least one of whom is a subscriber to be monitored, where the at least one subscriber to be monitored is a subscriber in an intelligent network, **characterized by** the following features:
a) the call number of the subscriber to be monitored or of the subscribers to be monitored is **characterized by** a corresponding entry in a storage means in a service control point (SCP) in a communication network, this characterization containing a statement indicating which third communicating subscriber(s) need(s) to be authorized to monitor a communication link to this subscriber who is to be monitored;
b) a switching centre (service switching point) is informed by the service control point that a subscriber is to be monitored and which subscriber is to be monitored;
c) when a subscriber to be monitored is called or when he calls a second communicating subscriber, a three-way conference between the subscriber to be monitored and the calling or called second communicating subscriber and a third communicating subscriber authorized for monitoring is set up;
d) subscriber data characteristic of subscribers in an intelligent network, such as the IN number or the duration of SCP access, are transmitted to an authorized third communicating subscriber.

## Revendications

1. Procédé destiné à écouter une liaison de communication, notamment, une conversation téléphonique, entre deux abonnés de communication, dont au moins l'un est un abonné à surveiller, ledit au moins un abonné à surveiller étant abonné d'un réseau intelligent, **caractérisé par** les caractéristiques suivantes:
a) le numéro d'appel de l'abonné à surveiller ou des abonnés à surveiller sont **caractérisés par** une inscription correspondante dans un moyen de mémorisation d'un point de contrôle des services (Service Control Point, SCP) d'un réseau de communication, ce marquage renfermant une information indiquant quel abonné tiers de communication est autorisé ou quels abonnés tiers de communication sont autorisés à écouter une liaison. de communication avec cet abonné à surveiller;
b) un central de commutation (Service Switching Point) est informé par le point de contrôle des services qu'un abonné est à surveiller et quel abonné est à surveiller.
c) si un abonné à surveiller est appelé ou s'il appelle un deuxième abonné de communication, une conférence à trois de l'abonné à surveiller et du deuxième abonné de communication appelant ou, respectivement, appelé est établie avec un abonné tiers de communication habilité à l'écoute,
d) pour des abonnés d'un réseau intelligent, des données d'abonné caractéristiques, telles que, à titre d'exemple, le numéro IN ou la durée d'un accès SCP, sont transmises à un abonné tiers de communication habilité.
